Europäisches Patentamt

European Patent Office

Office européen des brevets

(11) Publication number: **0 174 178**
**A1**

# EUROPEAN PATENT APPLICATION

(21) Application number: **85306226.3**

(22) Date of filing: **02.09.85**

(51) Int. Cl.⁴: **G 01 F 23/02**

(30) Priority: **04.09.84 US 646715**

(43) Date of publication of application:
**12.03.86 Bulletin 86/11**

(84) Designated Contracting States:
**AT BE CH DE FR GB IT LI LU NL SE**

(71) Applicant: **THE BABCOCK & WILCOX COMPANY**
**1010 Common Street P.O. Box 60035**
**New Orleans Louisiana 70160(US)**

(72) Inventor: **Hipple, James Henry**
**2950 Thrush Avenue**
**Lancaster Ohio(US)**

(72) Inventor: **Reed, Neil Edmond**
**2826 Sugar Grove Road**
**Lancaster Ohio(US)**

(72) Inventor: **Smith, Don William**
**888 Houfer Drive**
**Lancaster Ohio(US)**

(74) Representative: **Purvis, William Michael Cameron et al,**
**D. Young & Co. 10 Staple Inn**
**London WC1V 7RD(GB)**

(54) **Optical fluid level indicator.**

(57) A local display of a fluid level is provided in connection with a fibre optic illuminating system in which a side-by-side, bi-colour light from a source (12, 13, 16) is passed through the fluid in a transparent level gauge (11). Diverging light passing from the level gauge, refracted in response to the fluid and the material of the gauge is masked and one colour is passed to a focusing lens (18) which focuses the one colour light on an input end (21) of a fibre optic cable (22) and allows peripheral light rays (19) to be passed to a local readout (30) in a plane above or below the focusing lens (18).

FIG. 2

EP 0 174 178 A1

1

## "OPTICAL FLUID LEVEL INDICATION"

The invention relates to a method of and apparatus for optically indicating a fluid level utilizing a fibre optic light conducting element and has particular though not exclusive application to generating a local readout display of a boiler steam/water level.

It is often desirable to provide fluid level instrument readout capability both locally, in proximity to instrumented equipment, and at a remote location. In electric generating power plant and industrial applications, for example, boiler steam/water level readout is typically provided in the vicinity of the boiler drum and at a panel in a remotely located control room.

United States Patent US 4,397,187 discloses a fibre optic light conducting system that provides a steam/water level indication for boilers which have both a remote and local readout display of boiler steam/water level.

In that type of system, a plurality of tungsten filament lamps are used to generate light beams which are pased through side-by-side red and green filters. The coloured light is focused onto and passed through transparent viewing ports of a boiler water level gauge and then through shutters and secondary focusing lenses which direct the beams through beam splitters. The beam splitters divide each of the beams into a major portion which is focused onto the polished input end of a fibre optic cable that transmits the major portion to the remote control room and a minor portion which is reflected to a locally mounted glass diffuser to provide a local indication of steam/water level. Although such a system may operate satisfactorily, the local readout necessitates an undesirable diversion of power from the fibre optic cable to the control room and is physically expensive to incorporate.

According to one aspect of the invention there is provided a method of optically indicating a fluid level at locations proximate to and remote from a level gauge composed of a transparent material containing the fluid the method being characterised by the steps of:

passing a bi-colour light through the gauge and the fluid whereby the bi-colour light is refracted in accordance with the type of the fluid and the gauge material and diverges through the gauge material;

providing a masking plate with an aperture therein between the gauge and a focusing lens, and aligning the aperture and the focusing lens in the path of the diverging light so as to pass one colour of the diverging light through the aperture to and above and below and/or to the sides of the focusing lens;

focusing the one colour of the diverging light passed to the focusing lens onto a locally receiving face of a fibre optic cable of a remote readout assembly; and

illuminating a glass diffuser proximate to the gauge with the one colour of the diverging light which passes above, below and/or to the sides of the focusing lens.

According to another aspect of the invention there is provided apparatus for optically indicating a fluid level at locations proximate to and remote from a level gauge composed of a transparent material containing the fluid the apparatus being characterised by:

a source of bi-colour light to produce light to be passed through the gauge and the fluid, to be refracted in accordance with the type of the fluid and the material of the gauge and to diverge through the material of the gauge;

a masking plate with an aperture therein located between the gauge and a focusing lens with the aperture and the focusing lens aligned in the path of the diverging light so as to pass one colour of the diverging light through the aperture to and also above and below and/or to the sides of the focusing lens;

a local receiving face of a fibre optic cable of a remote readout assembly onto which the one colour of the diverging light passed to the focusing lens is focused; and

a glass diffuser proximate to the gauge and to be illuminated with one colour of the diverging light which passes above, below and/or to the sides of the focusing lens.

Thus, excess energy that is outside the secondary lens of a fibre optic illuminating boiler level gauge illuminating system is utilized to provide a continuous local readout display without diverting or otherwise sacrificing any of the optical energy going to the control room.

When used for indicating the fluid level in a boiler level gauge containing water and steam, the invention preferably comprises passing the converging bi-colour light directly into the gauge and the fluid where the light refracts in accordance with the type of fluid and the gauge material and diverges through the gauge material to the focusing lens. The masking plate or a shutter having an adjustable aperture is provided between the gauge and the focusing lens. The aperture and the secondary focusing lens are aligned in the path of the diverging light advancing from the gauge in order to pass one colour of the diverging light, through the aperture, to the focusing lens and, as well, around the focusing lens. The other colour is masked by the masking plate. The alternate colours are selectively masked or passed by the masking plate as a function of the refractive index of the type of gauge material and the type of fluid through which the bi-colour light is passed. The central portion of the one colour of the diverging light, which is passed through the focusing lens, is focused directly onto the locally receiving face of the fibre optic cable operatively connected to a remote readout assembly. Part of the remaining portion of the diverging light, preferably the portion of diverging light which passes above or below the focusing lens, illuminates the glass diffuser proximate to the gauge operatively creating a continuous local readout display.

The invention is diagrammatically illustrated by way of example in the accompanying drawings, in which:-

Figure 1 is a schematic planar representation of one embodiment of apparatus for optically indicating a fluid level according to the invention;

Figure 2 is a schematic elevational representation of the apparatus of Figure 1; and

Figures 3 and 4 are diagrammatic representations of a vertical projection of a colour image onto a focusing lens and diffuser of the arrangement of Figures 1 and 2.

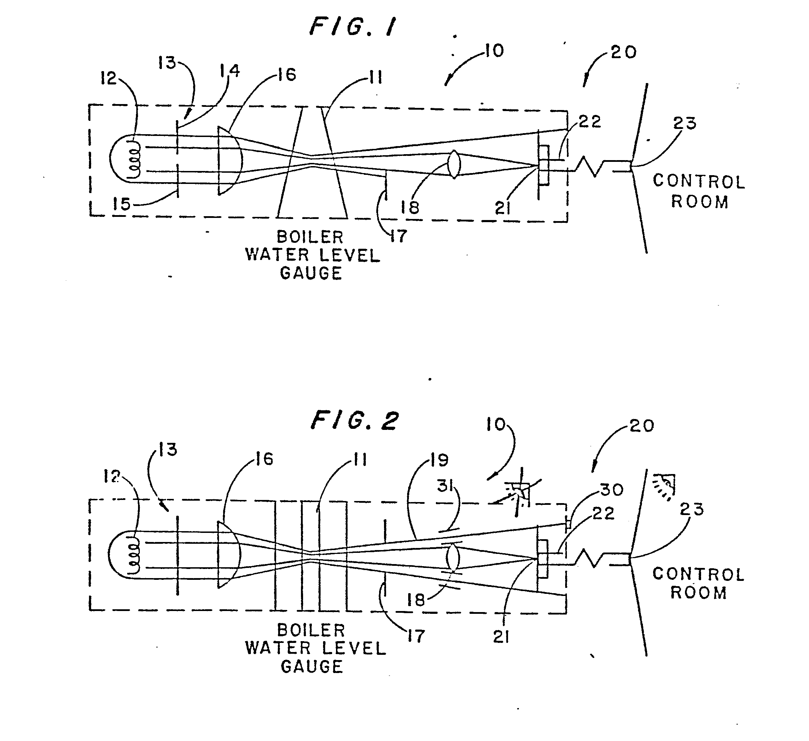

Referring to the drawings, Figures 1 and 2 illustrate a fibre optic illuminator including an indicator assembly 10 and a fibre optic light conducting system 20 for monitoring the steam/water level of a boiler drum. It should be understood that, while the following description is directed to boiler water level monitoring, it is merely illustrative of a preferred application of the invention and that the described technique, assembly and system may be employed in various fluid level monitoring applications.

4    0174178

The indicator assembly 10 and fibre optic light conducting system 20 are described herein in terms of a single port of what is usually a five-port or more type water level assembly having vertically aligned ports which typically correspond to particular fluid levels of the instrumented equipment. The components of the indicator assembly and fibre optic light conducting system are duplicated for each port of the water level gauge.

As shown, the indicator assembly includes a tungsten-halogen lamp 12, a bi-colour filter assembly 13 embodying a red filter 14 and a green filter 15, a primary focusing lens 16 located between the filter assembly 13 and a port 11 of the water level gauge, a shutter or masking plate 17 and a secondary focusing lens 18.

The secondary focusing lens 18 demagnifies and focuses the respective bi-colour image onto an input end 21 of a fibre optic cable 22 which, in turn, transmits the image to a viewer 23 mounted on a console in a remote control room.

In the form of the arrangement shown in Figures 1 and 2, the red and green filters 14, 15 are positioned, side-by-side, to pass the two colours red and green of a light beam, generated by the lamp 12, to the water level gauge port 11. The colours green and red are accepted in the power industry as standard colours for indicating water steam, respectively.

The level gauge contains water and steam at high temperature and pressure. The level gauge port 11 is composed of a transparent material which comprises a high strength glass and a protective mica barrier as the fluid boundary. In the water level gauge, depending upon the vertical level of the water-steam interface, the bi-colour light passes from the transparent material into either water or steam. Since the refraction indices of water and steam are different, the respective refractions laterally shift the transmission path of the horizontally adjacent, side-by-side colours to the left or to the right. The bi-colour light leaving the gauge port 11 is diverging because of the primary lens focal characteristics and diffusion properties of the port materials. An aperture in the masking plate 17 is aligned so that one colour of the bi-colour light will pass through the aperture in the masking plate 17. Thus, if there is water in the port 11 the bi-colour light is shifted by the refraction properties of the water and gauge material so that the colour green is passed through the aperture and the colour red is blocked or masked by the plate 17. If steam is in the port, the colour red is passed through the aperture and the colour green is shifted off the secondary lens 18. The central portion of the diverging coloured light which passes through the aperture is directed to the secondary lens 18 which focuses the light onto the input end of the fibre optic cable 21. Since the coloured light is diverging, some of the light rays 19 do not pass through the secondary focusing lens 18 but passes outside of the periphery of the lens 18. A direct local display is obtained by providing a second viewing port, for example, in the form of a glass diffuser 30, to intercept at least a part of the remaining portion of the one colour of the diverging light advancing from the gauge port and aperture. The glass diffuser 30 is preferably located to intercept light advancing past the secondary lens 18, above or below the lens 18 to intercept diffused light rays 19 which pass through an optical path 31 outside of the secondary lens 18. Preferably a common vertical plane passes through the vertical centre line of each of the aperture 17, the focusing lens 18 and the glass diffuser 30.

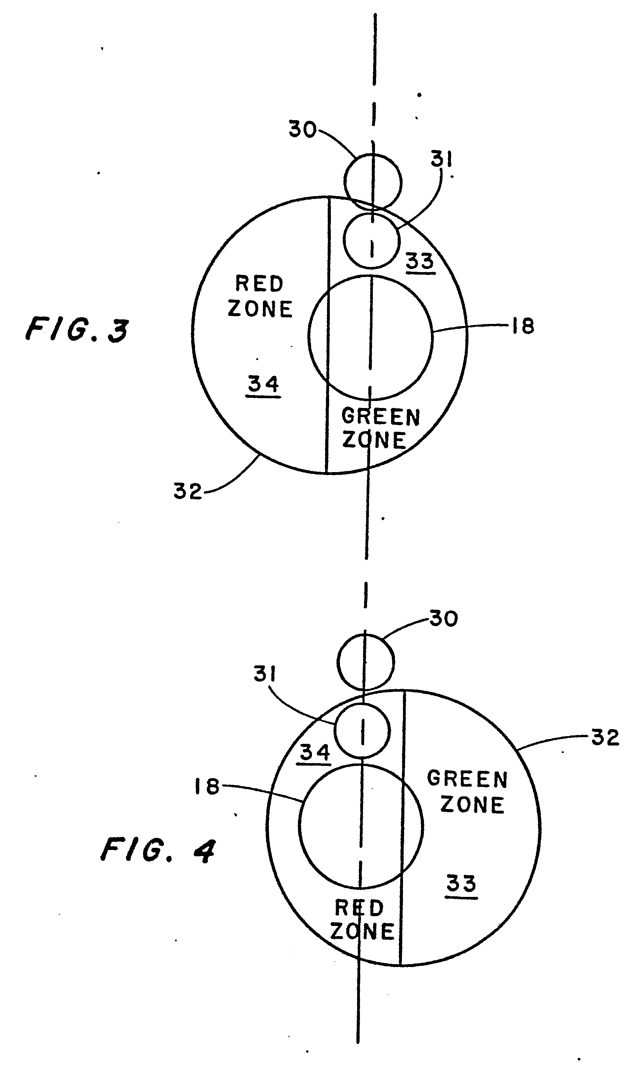

Figures 3 and 4 schematically illustrate the vertical superpositioning of the secondary focusing lens 18, the optical window or path 31, the local readout glass diffuser 30 as well as the superposition of a projection of the bi-colour image 32 upon the lens 18 and the path 31. Figure 3 illustrates the superposition of a green zone 33 onto the lens 18 and the path 31 to the diffuser 30 to indicate a water condition in the level gauge port 11. Figure 4 illustrates the superposition of a red zone 34 of the bi-colour image onto the lens 18 and the path 31 to the diffuser 30 to indicate that steam is in the level gauge port 11.

Thus there is provided a method of optically indicating a fluid level at locations both proximate to and remote from the port 11 of a level gauge composed of a transparent material fluid boundary containing a fluid. The method includes the steps of passing a bi-colour light through the port of the gauge whereby the bi-colour refracts responsive to the type of the fluid and the gauge material and thereafter diverges out from the gauge material, providing the masking plate 17 having an aperture between the gauge and the focusing lens 18, and aligning the aperture and the focusing lens 18 in the path of the diverging light so as to pass one colour of the diverging light through the aperture to and above and below the focusing lens 18. The method, moreover, further includes the steps of focusing the one colour of the diverging light passed to the focusing lens 18 into the locally receiving face 21 of the fibre optic cable 22 of a remote readout assembly and illuminating the glass diffuser 30, proximate the gauge port 11 with the one colour of the diverging light which passes above or below the focusing lens 18.

The method of the invention can provide a continuous local display which has several important advantages over prior art systems.

The local display achieved need not require the diversion or dissipation of any of the light which provides the remote or control room image. No adjustments need to be made. The local display, moreover, can be direct and passive and does not rely upon any intermediate components to create the image. Accordingly, the local display can remain operational in emergency situations even though the fibre optic cable may be severed, for example, by fire.

## CLAIMS

1. A method of optically indicating a fluid level at locations proximate to and remote from a level gauge composed of a transparent material containing the fluid, the method being characterised by the steps of:

passing a bi-colour light through the gauge (11) and the fluid whereby the bi-colour light refracts in accordance with the type of the fluid and the gauge material and diverges through the gauge material;

providing a masking plate (17) with an aperture therein between the gauge (11) and a focusing lens (18), and aligning the aperture and the focusing lens (18) in the path of the diverging light so as to pass one colour of the diverging light through the aperture to and above and below and/or to the sides of the focusing lens;

focusing the one colour of the diverging light passed to the focusing lens (18) onto a locally receiving face (21) of a fibre optic cable (22) of a remote readout assembly; and

illuminating a glass diffuser (3) proximate to the gauge (11) with the one colour of the diverging light which passes above, below and/or to the sides of the focusing lens (18).

2. A method according to claim 1, wherein the bi-colour light is passed through the gauge (11) with two colours of light being passed side-by-side.

3. A method according to claim 1 or claim 2, wherein the two colours are red and green.

4. A method according to any one of claims 1 to 3, wherein the fluid comprises water and/or steam.

5. A method according to claim 4, wherein the fluid is water and the bi-colour light passing through the gauge (11) and the fluid is laterally refracted so that the one colour of light passing through the aperture is green.

6. A method according to claim 4, wherein the fluid is steam and the bi-colour light passing through the gauge (11) through the aperture is red.

7. A method according to any one of claims 1 to 6, wherein the aligning step comprises aligning the aperture and the focusing lens (18) so as to advance a central portion of the one colour of the diverging light to the focusing lens (18) and at least a part of the remaining portion of the one colour of the diverging light to the glass diffuser (30).

8. A method according to any one of claims 1 to 7, including the step of aligning the masking plate (17), the focusing lens (18) optical path and the glass diffuser (30) so that a common vertical plane extends through the vertical centrelines of each of the aperture, the focusing lens (18) optical path and the glass diffuser (30).

9. Apparatus for optically indicating a fluid level at locations proximate to and remote from a level gauge (11) composed of a transparent material containing the fluid the apparatus being characterised by:
a source (12, 13, 14, 15, 16) of bi-colour light to produce light to be passed through the gauge (11) and the fluid and to be refracted in accordance with the type of the fluid and the material of the gauge (11) and diverges through the material of the gauge (11);
a masking plate (17) with an aperture therein located between the gauge (11) and a focusing lens (18) with the aperture and the focusing lens (18) aligned in the path of the diverging light so as to pass one colour of the diverging light through the aperture to and also above and below and/or to the sides of the focusing lens (18);
a local receiving face (21) of a fibre optic cable (22) of a remote readout assembly onto which the one colour of the diverging light passed to the focusing lens (18) is focused; and
a glass diffuser (30) proximate to the gauge (11) and to be illuminated with one colour of the diverging light which passes above, below and/or to the sides of the focusing lens (18).

0174178

1/2

FIG. 1

BOILER
WATER LEVEL
GAUGE

CONTROL
ROOM

FIG. 2

BOILER
WATER LEVEL
GAUGE

CONTROL
ROOM

FIG. 3

FIG. 4

0174178

European Patent
Office

**EUROPEAN SEARCH REPORT**

Application number

| | | | |
|---|---|---|---|
| **DOCUMENTS CONSIDERED TO BE RELEVANT** | | | EP 85306226.3 |

| Category | Citation of document with indication, where appropriate, of relevant passages | Relevant to claim | CLASSIFICATION OF THE APPLICATION (Int Cl 4) |
|---|---|---|---|
| A | US - A - 4 397 182 (BAKUL) <br> * Fig. 1,2 * <br> -- | 1-6,9 | G 01 F 23/02 |
| A | US - A - 4 450 722 (KEYES) <br> * Abstract; fig. 1 * <br> -- | 1-6,9 | |
| A | US - A - 4 217 778 (THAYER) <br> * Fig. 2; column 4, lines 14-68 * <br> -- | 1-6,9 | |
| A | US - A - 2 115 899 (BLACKBURN) <br> * Fig. 4 * <br> ---- | 1-6,9 | |

**TECHNICAL FIELDS SEARCHED (Int Cl 4)**

G 01 F 23/00

The present search report has been drawn up for all claims

| Place of search | Date of completion of the search | Examiner |
|---|---|---|
| VIENNA | 27-11-1985 | GRONAU |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPU form 1503 03 82